(19) Europäisches Patentamt

European Patent Office

Office européen des brevets

(11) EP 0 597 417 B1

(12) **EUROPÄISCHE PATENTSCHRIFT**

(45) Veröffentlichungstag und Bekanntmachung des Hinweises auf die Patenterteilung:
**12.02.1997 Patentblatt 1997/07**

(51) Int. Cl.⁶: **C05G 1/00**, C05F 3/02

(21) Anmeldenummer: 93118059.0

(22) Anmeldetag: **08.11.1993**

(54) **Kompost enthaltender organischer bzw. organisch-mineralischer Dünger**

Organic or organomineral fertiliser comprising compost

Engrais organique ou organominéral contenant du compost

(84) Benannte Vertragsstaaten:
**BE DE DK FR NL**

(30) Priorität: **11.11.1992 DE 4237964**

(43) Veröffentlichungstag der Anmeldung:
**18.05.1994 Patentblatt 1994/20**

(73) Patentinhaber: **Ruhwinkel, Heinz-Josef**
**48477 Hörstel (DE)**

(72) Erfinder: **Heinze, Gerald Prof. Dr.**
**D-49577 Kettenkamp (DE)**

(74) Vertreter: **Finkener und Ernesti**
**Patentanwälte**
**Heinrich-König-Strasse 119**
**44795 Bochum (DE)**

(56) Entgegenhaltungen:
**EP-A- 0 444 392          DE-A- 3 446 520**

**Beschreibung**

Die Erfindung betrifft die Verwendung eines Düngers, vorzugsweise für landwirtschaftlich genutzte Flächen, der unter Verwendung von Kompost (Humus) hergestellt ist und aus einem Gemisch aus Kompost und einem mineralischen oder organischen Dünger besteht. Da es in der Literatur keine eindeutige Unterscheidung zwischen den Begriffen Kompost und Humus gibt, soll in der vorliegenden Beschreibung der Ausdruck Kompost als Synonym für Humus angesehen werden.

Von den zur Kompostierung verwendbaren organischen Stoffen kommt den beiden folgenden wegen des Mengenanfalls eine besondere Bedeutung zu:

1. Kompost aus tierischen Rohstoffen (Gülle, Jauche, Mist usw.)
2. Kompost aus Grünabfällen (Grasschnitt, Laub, Kleinholz usw.) und aus den getrennt eingesammelten organischen Anteilen des Hausmülls.

Die theoretisch mögliche Kompostmenge aus tierischen Reststoffen wird für das Gebiet der Bundesrepublik mit etwa 60 - 80 Mio. t pro Jahr angesetzt, während die Kompostmengen aus Grünabfällen und Hausmüll etwa 6 - 8 Mio. t pro Jahr betragen. Die bisherigen Absatzmärkte sind auf den gewerblichen und privaten Gartenbau, öffentliche Grünanlagen und die Rekultivierung beschränkt; Kompostmengen in der Größenordnung von 60 - 80 Mio. t pro Jahr können durch diese Betriebe nicht verarbeitet werden, so daß als einziger realistischer Absatzmarkt die Landwirtschaft zur Verfügung steht.

Es ist bekannt, daß die Wirksamkeit eines mineralischen oder organischen Düngers durch Zusatz von Humus verbessert werden kann.

Aus der EP-A-444392 sind Düngergranulate, die u.a. Kompost und mineralische weitere Komponenten in beliebiger Mischung enthalten können, bekannt.

Die mineralischen Bestandteile eines mineralischen Düngers gelangen teilweise durch Auswaschen in den Boden oder aber entweichen in die Atmosphäre. Damit ist eine nicht unerhebliche Belastung der Umwelt verbunden.

Die Aufgabe die der Erfindung zugrunde liegt, besteht darin, Kompost, d. h. bodenverträgliche und damit umweltfreundliche organische Reststoffe, die durch Ab-, Um - und Aufbau organischer Substanz entstanden sind (Bodenverbesserer) einer Verwertung zuzuführen und einen Kompost enthaltenden Dünger zu erzeugen, dessen Anteil an mineralischen Bestandteilen oder Nährstoffen, insbesondere an N, $P_2O_5$ und $K_2O$ bei gleicher Ertragsleistung verglichen mit herkömmlichen mineralischen Düngern wesentlich reduziert ist.

In der allgemeinen Ausführungsform ist die Erfindung in dem unabhängigen Anspruch 1 formuliert; bevorzugte Gegenstände der Erfindung sind in den abhängigen Ansprüchen 2 - 4 formuliert.

Es hat sich überraschenderweise herausgestellt, daß es möglich ist, den Anteil an mineralischen Bestandteilen eines Düngers bis zu etwa 50 % zu reduzieren, wenn die Düngung erfindungsgemäß mit einem Dünger erfolgt, der aus einem Gemisch aus Kompost und einem mineralischen oder organischen Dünger besteht, das nach dem Vermischen der Bestandteile zu Pellets oder Granulaten verarbeitet wird, die anschließend gekühlt und/oder getrocknet wurden, wobei der Kompostanteil des Düngers zwischen 30 und 70 % liegt und der Anteil des mineralischen oder organischen Düngers um etwa 40 bis 60 % geringer ist als der Düngerbedarf/ha (D) der zu düngenden Pflanzen, der sich nach folgender Formel errechnet:

$$D = D_P - D_B ,$$

wobei

$D_P$ der Bedarf der Pflanzen an einem bestimmten Nährstoff pro Hektar und
$D_B$ das Angebot des Bodens an einem bestimmten Nährstoff pro Hektar ist.

Die Erfindung sieht vor, daß zur Herstellung des Gemisches Kompost aus tierischen Rohstoffen, insbesondere Gülle, Jauche oder Mist oder Kompost aus Grünabfällen, wie Grasschnitt, Laub, Kleinholz und getrennt eingesammelten organischen Anteilen des Hausmülls verwendet wird.

Der Anteil des organischen Düngers besteht erfindungsgemäß aus organischen Düngemitteln wie Guano, Tiermehl oder Hornmehl, während als mineralischer Dünger übliche Düngemittel wie Kalkammonsalpeter, Superphosphat oder Kornkali verwendet werden.

<u>Ausführungsbeispiel:</u>

Für den pro Hektar erforderlichen Stickstoffbedarf von Kulturpflanzen liegen Faustzahlen vor, die der einschlägigen Literatur entnommen werden können. Das pro Hektar vorliegende Stickstoffangebot des zu bestellenden Bodens läßt sich in bekannter Weise durch Messungen ermitteln. Durch Subtraktion der beiden ermittelten Werte ergibt sich der Stickstoffbedarf, der pro Hektar in den Boden einzubringen ist.

Für ein mit Roggen, dessen Stickstoffbedarf 120 kg/ha beträgt, zu bestellendes Feld wurde das Stickstoffangebot des Bodens mit 30 kg/ha ermittelt. Die Subtraktion ergibt einen Stickstoffdüngerbedarf von 90 kg/ha.

Die erfindungsgemäße Verwendung des Düngers erlaubt es, den Bedarf an Stickstoffdünger um 50 % zu reduzieren, so daß der effektive Stickstoffdüngerbedarf erfindungsgemäß nur 45 kg/ha beträgt.

Enthält der Dünger 4 % Stickstoff, so sind 1125 kg des Düngers pro Hektar erforderlich, um den Bedarf von 45 kg N/ha zu decken.

Ein für den Fachmann völlig unerwarteter und nicht voraussehbarer Vorteil besteht darin, daß ein pelletiertes oder granuliertes Gemisch von Kompost und mineralischen bzw. organischen Dünger im Vergleich zu einem rein mineralischem oder rein organischen Dünger, etwa gleiche Erträge bringt, selbst wenn der Anteil an mineralischen Bestandteilen, insbesondere die Stickstoffmenge, bedeutend, z. B. um die Hälfte, geringer ist. Dadurch wird bei gleichzeitiger Ausnutzung der bodenverbessernden Eigenschaften des Kompostes die Belastung des Bodens durch die mineralischen Bestandteile des Düngers in gleichem Maße verringert. Obschon eine eindeutige wissenschaftliche Erklärung für diesen Effekt noch nicht vorliegt, führt die Anmelderin ihn zunächst darauf zurück, daß durch die Agglomeration der mineralische bzw. organische Dünger nicht frei neben dem Kompost vorliegt, sondern in einer organischen Matrix. Die mineralischen Bestandteile werden daher offenbar nicht ausgewaschen und können nicht ins Grundwasser gelangen. Die Nährstoffe des mineralischen oder organischen Düngers werden vielmehr durch den Kompost fixiert und erst dann freigegeben, wenn die Mikroorganismen des Bodens aktiv werden und den Kompost auffressen. Dies geschieht, wenn im Frühjahr die Temperaturen steigen, d. h. zu einen Zeitpunkt, zu den die Pflanzen Nährstoffe zum Wachstum benötigen. Bei der erfindungsgemäßen Verwendung des Düngers wird eine weitere Forderung erfüllt, die darin besteht, daß der Dünger mit modernen Düngerstreuern auf die landwirtschaftlich genutzten Flächen ausbringbar ist. Ein weiterer Vorteil ist darin zu sehen, daß die großen Mengen an anfallenden Kompost aus tierischen Reststoffen einer umweltfreundlichen Verarbeitung zugeführt werden können.

Versuchsergebnisse:

Bei einem Feldversuch wurde die erfindungsgemäße Verwendung des Düngers mit der eines herkömmlichen mineralischen Düngers verglichen. Der (DELA-)Dünger bestand aus einer dosierten Kombination aus Kompost und mineralischen Dünger in Form von Pellets mit einem Durchmesser von 6 mm und einer Länge von 10 - 12 mm.

Fruchtart:        Mais

Die Zusammensetzung der verwendeten Dünger ist in der folgenden Tabelle 1 zusammengestellt.

Tabelle 1

| Versuchsdüngung Vergleichsfeld | | |
|---|---|---|
| Stickstoff (N) | 150 kg/ha Diammonphosphat mit 18 % N | = 27 kg/ha |
| | 550 kg/ha Kalkammonsalpeter mit 27 % N | = 150 kg/ha |
| | Gesamtmenge N | = 177 kg/ha |
| Versuchsfeld | | |
| Stickstoff (N) | 1200 kg/ha (DELA-)Dünger mit 7 % N | = 84 kg/ha |
| | Gesamtmenge N | = 84 kg/ha |
| Stickstoffmenge | | |
| Versuchsfeld : Vergleichsfeld = 1 : 2,1 | | |

Es ergeben sich die folgenden Gehalte an mineralischen Bestandteilen:

(DELA-)Dünger:        7 % N  
7 % $P_2O_5$  
7 % $K_2O$

2 % MgO

Mineralischer Dünger:   1. Diammonphospat

18 % N

46 % $P_2O_5$

2. Kalkammonsalpeter

27 % N

Das Versuchsfeld umfaßte 5 ha mit Bodenpunkten zwischen 20 - 30.

Das angrenzende Vergleichsfeld war 30 ha groß mit Bodenpunkten zwischen 25 - 35.

Ziel dieses Versuches war festzustellen, ob gleiche Erträge mit erfindungsgemäß verwendeten Dünger im Vergleich zum ausschließlich verwendeten mineralischen Dünger zu erzielen sind.

Die Stickstoffmenge des erfindungsgemäß verwendeten Düngers (84 kg/ha) betrug nur etwa die Hälfte der des mineralischen Düngers (177 kg/ha).

Die Ergebnisse sind auf der folgenden Tabelle 2 zusammengefaßt, aus der sich ergibt, daß die erzielten Erträge nahezu gleich sind.

Tabelle 2

| Erträge der Versuchsdüngung | | | | |
|---|---|---|---|---|
| Bezeichnung | Gesamtfläche | Versuchsfläche | Vergleichsfeld | Späteinsaat |
| Vegetationszeit | ca. 120 Tage | ca. 120 Tage | ca. 120 Tage | ca. 100 Tage |
| Größe | 41 ha | 5 ha | 30 ha | 6 ha |
| Ernte, total | 12.710 dt | 1.450 dt | 8.950 dt | 2.310 dt |
| Ernteertrag, durchschn. | 310 dt/ha | 290 dt/ha | 298 dt/ha | 385 dt/ha |
| Trockensubstanz | 29,2 % | 33 % | 30 % | 24 % |
| Ernte, bez. auf TS | 3.711 dt | 479 dt | 2.685 dt | 554 dt |
| Trockensubstanz, Ernte | 90,6 dt TS/ha | 95,7 dt TS/ha | 89,4 dt TS/ha | 92,4 dt TS/ha |
| Prozentualer Vergleich der TS | 101 | 107 | 100 | 103 |

(Versuchsfeld 290 dt/ha; Vergleichsfeld 298 dt/ha)

Bezogen auf die Trockensubstanz ergeben sich für das Versuchsfeld 95,7 dt/ha Vergleichsfeld 89,4 dt/ha

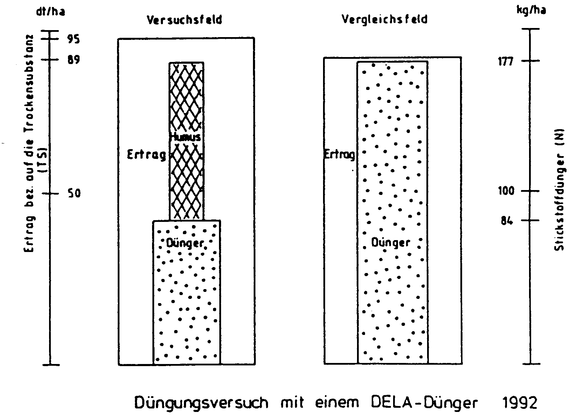

Die Ergebnisse sind auf Abb. 1/1 graphisch dargestellt.

**Patentansprüche**

1.   Verwendung eines Düngers, vorzugsweise für landwirtschaftlich genutzte Flächen, der aus einem Gemisch aus Kompost und einem mineralischen oder organischen Dünger besteht, das nach dem Vermischen der Bestandteile zu Pellets oder Granulaten verarbeitet ist, die anschließend gekühlt und/oder getrocknet wurden, wobei der Kompostanteil des Düngers zwischen 30 und 70 % liegt und der Anteil des mineralischen oder organischen Düngers um etwa 40 bis 60 % geringer ist als der Düngerbedarf (D) pro Hektar der zu düngenden Pflanzen, der sich wie folgt errechnet:

$$D = D_P - D_B \,,$$

wobei

$D_P$ der pro ha erforderliche Bedarf der Pflanzen an einem bestimmten Nährstoff und

$D_B$ das pro ha vorliegende Angebot des Bodens an diesem Nährstoff ist.

2.   Verwendung nach Anspruch 1, dadurch gekennzeichnet, daß das Gemisch Kompost aus tierischen Reststoffen, insbesondere Gülle, Jauche oder Mist und/oder Kompost aus Grünabfällen, wie Grasschnitt, Laub, Kleinholz und getrennt eingesammelte organische Anteile des Hausmülls besteht.

3.   Verwendung nach den Ansprüchen 1 und 2, dadurch gekennzeichnet, daß der organische Dünger aus organischen Düngemitteln wie Guano, Tiermehl oder Hornmehl besteht.

4. Verwendung nach einem der vorhergehenden Ansprüche, dadurch gekennzeichnet, daß der mineralische Dünger aus üblichen Düngemitteln wie Kalkammonsalpeter, Superphosphat oder Kornkali besteht.

## Claims

1. Use of a fertiliser, preferably for agriculturally used expanses of land, comprising a mixture of compost and a mineral or organic fertiliser, which after mixing of the constituents is processed to form pellets or granules which are then cooled and/or dried, wherein the proportion of compost of the fertiliser is between 30 and 70% and the proportion of the mineral or organic fertiliser is about 40 to 60% less than the fertiliser requirement (D) per hectare of the plants to be fertilised, which is calculated as follows:

$$D = D_P - D_B$$

wherein

$D_P$ is the requirement per hectare of the plants for a given nutrient and
$D_B$ is the supply per hectare of the ground of that nutrient.

2. Use according to claim 1 characterised in that the mixture compost comprises animal residues, in particular manure, liquid manure or dung and/or compost comprising green waste such as grass cuttings, leaves, kindling and separately collected organic components of domestic refuse.

3. Use according to claims 1 and 2 characterised in that the organic fertiliser comprises organic fertilising agents such as guano, animal meal or horn meal.

4. Use according to one of the preceding claims characterised in that the mineral fertiliser comprises usual fertilising agents such as calcium ammonium nitrate, superphosphate or grain potash.

## Revendications

1. Utilisation d'un engrais, avantageusement pour des surfaces utilisées en agriculture, qui se compose d'un mélange de compost et d'un engrais minéral ou organique, qui est élaboré après le mélange des constituants, en boulettes ou granulés, qui sont ensuite refroidis et/ou séchés, la proportion du compost de l'engrais étant comprise entre 30 et 70% et la proportion de l'engrais minéral ou organique étant plus faible, d'environ 40 à 60 %, que le besoin en engrais (D) par hectare des plantes à engraisser, que l'on calcule comme suit :

$$D = D_P - D_B,$$

$D_P$ étant le besoin nécessaire par hectare de plantes en une substance nutritive déterminée et

$D_B$ étant l'offre présente par hectare dans le sol en cette substance nutritive.

2. Utilisation selon la revendication 1, caractérisé en ce que le compost du mélange se compose de résidus animaux, en particulier de lisier, de purin ou de fumier et/ou d'un compost de déchets végétaux comme des coupes d'herbe, du feuillage, du petit bois et la partie organique rassemblée et séparée des ordures ménagères.

3. Utilisation selon les revendications 1 et 2, caractérisée en ce que l'engrais organique se compose d'agents organiques comme le guano, la farine de viande ou la farine de corne.

4. Utilisation selon l'une quelconque des revendications précédentes, caractérisée en ce que l'engrais minéral se compose d'agents habituels comme le salpêtre, le superphosphate ou la potasse de grains.

Düngungsversuch mit einem DELA-Dünger  1992